# EUROPÄISCHE PATENTSCHRIFT

(11) **EP 2 526 325 B1**
(45) Veröffentlichungstag und Bekanntmachung des Hinweises auf die Patenterteilung: **10.04.2019**
(21) Anmeldenummer: 11702390.3
(22) Anmeldetag: 15.01.2011
(51) Int. Cl.: F16K 11/07

(54) **VENTILVORRICHTUNG**
VALVE DEVICE
DISPOSITIF SOUPAPE

(30) Priorität: 21.01.2010 DE 102010005229
(43) Veröffentlichungstag der Anmeldung: 28.11.2012
(73) Patentinhaber: Hydac Fluidtechnik GmbH, 66273 Sulzbach/Saar (DE)
(72) Erfinder: BRUCK, Peter, 66484 Althornbach (DE); BILL, Markus, 66265 Heusweiler (DE); SCHULZ, Frank, 66440 Blieskastel-Bierbach (DE)
(74) Vertreter: Bartels und Partner, Patentanwälte
(86) Internationale Anmeldenummer: PCT/EP2011/000159
(87) Internationale Veröffentlichungsnummer: WO 2011/088975

(56) Entgegenhaltungen:
- DE-A1- 2 209 206
- DE-A1- 4 319 162
- DE-A1- 10 224 739
- GB-A- 1 527 931
- JP-A- 2005 248 785
- JP-U- S56 108 071
- JP-U- S56 119 074

## Beschreibung

Die Erfindung betrifft eine Ventilvorrichtung mit den Merkmalen im Oberbegriff von Anspruch 1.

Gattungsgemäße Ventilvorrichtungen sind in einer Vielzahl von Ausführungsformen, beispielsweise als Mehrwegeventile, auf dem Mark frei erhältlich. In Verbindung mit einer sogenannten elektromagnetischen Betätigung sind sie wichtiger Bestandteil der sogenannten Proportionalventiltechnik. Diese Technik ist im Wesentlichen dadurch charakterisiert, dass ein elektrisches Eingangssignal als Spannung mit einem elektronischen Verstärker entsprechender Spannungshöhe in einen elektrischen Strom umgesetzt wird.

Proportional zu diesem elektrischen Strom erzeugt ein Proportionalmagnet als Schaltmagnet die Ausgangsgrößen Kraft oder Weg. Diese Größen werden als Eingangssignal für die Ventilvorrichtung oder das Hydraulikventil eingesetzt und bedeuten proportional dazu, einen bestimmten Volumenstrom oder einen bestimmten Druck. Für den jeweiligen angesteuerten Verbraucher und ein damit betätigtes Arbeitselement an einer Maschine führt dies neben der Beeinflussung der Bewegungsrichtung zu der Möglichkeit der stufenlosen Beeinflussung der Geschwindigkeit und der Kraft. Gleichzeitig kann nach entsprechendem zeitlichem Verlauf, z.B. Änderung des Volumenstroms in der Zeit, die Beschleunigung oder Verzögerung stufenlos beeinflusst werden. Je nachdem, welche Funktion im Vordergrund steht, also die Wegefunktion, die Stromfunktion und/oder die Druckfunktion, findet die Proportionalhydraulik Anwendung bei Wegeventilen, Stromventilen oder sogenannten Druckventilen.

Die technischen Vorteile der Proportionalventiltechnik liegen in den kontrollierten Schaltübergängen, der stufenlosen Steuerung der Sollwerte und der Reduzierung der hydraulischen Einrichtungen für bestimmte Steuerungsaufgaben. Ferner sind mit Proportionalventilen schnelle und exakte Bewegungsabläufe möglich bei gleichzeitiger Verbesserung der Genauigkeit der Steuerungsvorgänge.

Es hat sich jedoch in der Praxis gezeigt, dass die bekannten Ventilvorrichtungslösungen auch auf dem Gebiet der Proportionalventiltechnik für manche Steuerungsaufgaben, wie sie bei doppelt wirkenden hydraulischen Arbeitszylindern auftreten können, bei denen unter Vermeidung mechanischer Kopplungsglieder die Ansteuerung für Positionieraufgaben erfolgt, Wünsche offen lässt, insbesondere im Hinblick auf die Funktionssicherheit des Gesamtsystems sowie des raschen Reagierens.

Durch die DE 43 19 162 A1 ist eine gattungsgemäße Ventilvorrichtung bekannt, mit zwei gegenüberliegenden mit einem Ventilgehäuse verbundenen Betätigungsmagneten, mit im Ventilgehäuse angebrachten Fluidanschlussstellen in Form mindestens eines Pumpenanschlusses P, mindestens zweier Nutzanschlüsse A, B und mindestens zweier Tankanschlüsse T1 und T2 sowie mit einem Ventilkolben, der radiale Vorsprünge aufweist, die jeweils einer Fluidanschlussstelle A, B, T1, T2 im Ventilgehäuse zuordenbar sind und mit fluidführenden Wegen zwischen den Vorsprüngen, die in einer Neutralstellung den Weg zu dem jeweiligen zuordenbaren Nutzanschluss A, B teilweise oder vollständig versperren, oder wobei bei freigehaltenen Nutzanschlüssen A, B der jeweilige Pumpenanschluss P durch den zuordenbaren Vorsprung vollständig gesperrt ist. Die bekannte Lösung betrifft ein Hydraulikventil, das zum Ansteuern eines hydraulischen Aktuators in einem System zur Wankstabilisierung eines Kraftfahrzeuges verwendbar ist.

Die DE 600 16 510 T2 beschreibt ein vorgesteuertes Wegeventil mit Positionsermittlung, mit einem Gehäuse mit einer Anzahl von Anschlüssen und einer Gehäusebohrung, in der jeder Anschluss mündet. Ein Ventilkolben ist axial verschiebbar in der Bohrung zum Wechseln der Strömungswege zwischen den Anschlüssen verschiebbar geführt. Es sind ferner aufwendige Steuermittel zum Steuern des Ventilkolbens vorgesehen, wobei die Steuermittel einen Kolben auf jeder Seite des Ventilkolbens und ein oder zwei Vorsteuerventile zum Stellen des Ventilkolbens durch Steuern des auf die Kolben wirkenden Vorsteuerfluids umfassen. Ein Magnet ist vorgesehen, der derart an einer Seite des Ventilkolbens angebaut ist, dass er im Gleichlauf mit dem Ventilkolben verschoben werden kann. Der Magnet ist ferner derart angeordnet, dass er an mindestens einer Seite des Ventilkolbens angrenzt. Mittels eines Magnetsensors ist es möglich, die Magnetkraft des Magneten über die gesamte Verschiebestrecke des Ventilkolbens zu erfassen.

Weiterhin offenbart die DE 102 24 739 A1 eine solche Ventilvorrichtung, bei der ein erster Vorsteuerraum, der eine erste Kolbenrückseite des Ventilkolbens mit einer Druckkraft beaufschlagt, und ein zweiter Vorsteuerraum vorgesehen sind, der eine zweite Kolbenrückseite mit einer Druckkraft beaufschlagt, und wobei der Druck in den Vorsteuerräumen durch einen ersten und einen zweiten Vorsteuerkolben steuerbar ist, die mittels eines ersten bzw. zweiten Elektromagneten bewegbar sind.

Die JP S56-119074 U offenbart ein Ventilvorrichtung mit einem Ventilgehäuse und mit einem, in einer Kolbenbohrung des Ventilgehäuses axial verschiebbar angeordneten Ventilkolben, über den ein erster Verbraucheranschluss und ein zweiter Verbraucheranschluss wechselweise mit einem Pumpenanschluss und mit einem Tankanschluss durch die Wirkung eines ersten Elektromagneten und eines zweiten Elektromagneten verbindbar sind, wobei der Ventilkolben aus einer zentrierten Ruhestellung heraus zur Verbindung des ersten Verbraucheranschlusses mit dem Pumpenanschluss und des zweiten Verbraucheranschlusses mit dem Tankanschluss in eine erste Richtung und zur umgekehrten fluidführenden Verbindung der Anschlüsse in eine entgegengesetzte Richtung verschiebbar ist, wobei ein erster Vorsteuerraum, der eine erste Kolbenrückseite des Ventilkolbens mit einer Druckkraft beaufschlagt, und ein zweiter Vorsteuerraum vorgesehen sind, der eine zweite Kolbenrückseite mit einer Druckkraft beaufschlagt, wobei der Druck in den Vorsteuerräumen durch einen ersten und einen zweiten Vorsteuerkolben steuerbar ist, die mittels des ersten bzw. zweiten Elektromagneten bewegbar sind, wobei der erste und zweite Vorsteuerraum über eine fluidführende Verbindung mit dem Pumpenanschluss verbunden sind und wobei die Vorsteuerkolben je eine fluidführende Verbindung zwischen den Vorsteuerräumen und dem Tankanschluss freigeben oder sperren.

Die DE 2 209 206, die GB 1 527 931, die JP S56-108071 U und die JP 2005-248785 A offenbaren weitere Ventilvorrichtungen.

Ausgehend von diesem Stand der Technik liegt der Erfindung die Aufgabe zugrunde, eine Ventilvorrichtung zu schaffen, die konstruktiv einfach im Aufbau ist und dennoch einen sicheren Betrieb auch bei schwierigen Betriebsbedingungen ermöglicht.

Diese Aufgabe ist erfindungsgemäß mit einer Ventilvorrichtung gelöst, die die Merkmale des Patentanspruches 1 in seiner Gesamtheit aufweist.

Gemäß dem kennzeichnenden Teil des Anspruches 1 ist die erfindungsgemäße Ventilvorrichtung dadurch gekennzeichnet, dass jeder Vorsteuerkolben eine Öffnung einer Abflussleitung in dem Ventilkolben für Druckmittel aus den Vorsteuerräumen zu je einem Tankanschluss freigibt oder sperrt.

Ferner besteht eine wesentliche Besonderheit der Erfindung darin, dass der erste und zweite Vorsteuerraum über eine fluidführende Verbindung mit dem Pumpenanschluss verbunden sind und dass die Vorsteuerkolben je eine fluidführende Verbindung zwischen den Vorsteuerräumen und dem Tankanschluss freigeben oder sperren. Durch die ständige, fluidführende Verbindung zwischen dem Pumpenanschluss und dem ersten und zweiten Vorsteuerraum kann das Druckmittel in den Vorsteuerräumen direkt als Steuermittel nutzbar gemacht werden, nämlich nach Maßgabe der vom betreffenden Elektromagneten bewirkten Positionseinstellung des zugehörigen Vorsteuerkolbens, der die fluidführende Verbindung zwischen dem betreffenden Vorsteuerraum und dem Tankanschluss und damit den Druck im Vorsteuerraum vorgibt. Bei einfacher Bauweise ist dadurch ein Gesamtsystem geschaffen, das sich durch Funktionssicherheit und rasche Reaktion auszeichnet.

Eine etwaige Störeinwirkung auf den Ventilkolben durch Reibungs- oder Strömungskräfte kann ohne Steuerungs- oder Regelungsaufwand durch einen verstärkten Abfluss von Druckmittel aus dem betreffenden Vorsteuerraum ausgeglichen werden, wodurch der Ventilkolben sich weiter in Richtung der gewünschten Position verschiebt.

Wird der elektrische Strom für den ersten Elektromagneten gesenkt oder abgeschaltet, so bewegt sich der Vorsteuerkolben, vorzugsweise zusätzlich durch einen Energiespeicher bewirkt, in Richtung einer Sperrstellung der fluidführenden Verbindung zwischen dem ersten Vorsteuerraum und dem Tankanschluss. Der sich in dem ersten Vorsteuerraum wieder aufbauende Druck schiebt den Ventilkolben erneut in Richtung seiner Ruheposition.

Der Ventilkolben lässt sich in derselben beschriebenen Weise auch bei Bestromung des zweiten Elektromagneten in die entgegengesetzte Richtung axial verschieben. Auf diese Weise lässt sich der zweite Verbraucheranschluss mit dem Pumpenanschluss verbinden und der erste Verbraucheranschluss mit dem Tankanschluss.

Es besteht ständig eine fluidführende Verbindung zwischen dem Pumpenanschluss und dem ersten und zweiten Vorsteuerraum. Das Druckmittel in den Vorsteuerräumen kann direkt auf die jeweilige Kolbenrückseite des Ventilkolbens wirken. Es kann auch zweckmäßig sein, mechanische Koppelglieder zwischen dem jeweiligen Vorsteuerraum und der betreffenden Kolbenrückseite des Ventilkolbens vorzusehen.

Um eine kompakte Bauweise der Ventilvorrichtung zu ermöglichen, ist die jeweilige fluidführende Verbindung zwischen dem Pumpenanschluss und den Vorsteuerräumen in dem Ventilkolben selbst angeordnet oder in dem Ventilgehäuse. Es empfiehlt sich bei einer Anordnung der betreffenden fluidführenden Verbindung, eine außermittige Längsbohrung in dem Ventilkolben vorzusehen. In dem Ventilgehäuse kann alternativ die fluidführende Verbindung in einer Längsbohrung mit radialem Abstand zu einer Längsachse des Ventilgehäuses ausgeführt sein. An jeweiligen Enden oder Endbereichen der Längsbohrung können Stichkanäle zu den betreffenden zwei Vorsteuerräumen geführt sein, wodurch sich insgesamt eine fluidführende, einen steten Druckmitteldruck aus dem Pumpenanschluss auf die Vorsteuerräume übertragende Verbindung ergibt.

In dem Ventilkolben ist vorzugsweise eine durchgehende fluidführende Verbindung von den Vorsteuerräumen zu dem Tankanschluss geführt. Die betreffende fluidführende Verbindung wird von je einem Vorsteuerkolben auf den sich gegenüberliegenden Enden oder Kolbenrückseiten des zuordenbaren Ventilkolbens gesteuert. Vorzugsweise ist ein Sitzventil mit Hilfe eines als Kegel oder Spitze gebildeten Endes jedes Vorsteuerkolbens gebildet.

Die fluidführenden Verbindungen weisen einen geringen Durchmesser auf, der insgesamt geeignet ist, die erforderlichen Stellgeschwindigkeiten des Ventilkolbens, ausgelöst durch die Druckdifferenz, in den beiden Vorsteuerräumen zu ermöglichen.

In einer Neutralstellung wird der Ventilkolben gehalten, indem auf beide Kolbenrückseiten ein Kraftspeicher mit gleicher Druckkraft zusätzlich zu der gleichen Druckkraft des Druckmittels in den Vorsteuerräumen wirkt. Die beiden Kraftspeicher können Druckfedern sein. Um den Versorgungsdruck nicht unmittelbar von dem Pumpenanschluss abzugreifen, kann es vorteilhaft sein, von einem Verbraucheranschluss, der die Lastseite des Verbrauchers abbildet, über ein Wechselventil den Pumpenanschluss und somit die fluidführenden Verbindungen von dem Pumpenanschluss zu den Vorsteuerräumen mit zu verbinden. Dadurch ergibt sich auch ein möglicher Betrieb der Ventilanordnungen bei einer abgeschalteten Druckmittelpumpe, allein durch den Lastdruck an dem Verbraucher. Wird die Druckmittelpumpe wieder eingeschaltet, so sperrt das Wechselventil und der Druck am Pumpenanschluss wird direkt von der Pumpe auf die beiden Vorsteuerräume übertragen.

Um den jeweils höchsten verfügbaren Druck entweder von dem Pumpenanschluss oder den beiden lastseitigen Verbraucheranschlüssen auf die Vorsteuerräume als Vorsteuerdruck zu führen, können alle drei betreffenden Anschlüsse, nämlich Pumpenanschluss, erster Verbraucheranschluss sowie zweiter Verbraucheranschluss über je ein Rückschlagventil an eine Sammelleitung zu der fluidführenden Verbindung zu den Vorsteuerräumen angeschlossen sein.

Zur Zentrierung des Ventilkolbens in einer neutralen, mittigen Ruhestellung in der Kolbenbohrung und zur Rückführung des Ventilkolbens bei einer Auslenkung desselben, können zusätzlich in jeden Vorsteuerraum je ein Kraftspeicher oder insbesondere eine Druckfeder eingesetzt sein. Die Feder kann die Schaltzeit zum Rückstellen des Kolbens verkürzen. Ebenso kann jeder Vorsteuerkolben mit Hilfe eines Kraftspeichers, vorzugsweise als Druckfeder ausgebildet, im Sinne eines Schließens der fluidführenden Verbindung von dem betreffenden Vorsteuerraum zu dem betreffenden Tankanschluss beaufschlagt sein. Es kann auch vorteilhaft sein, jeden Anker eines Elektromagneten mit einer Druckfeder im Sinne einer Verbringung des Ventilkolbens in eine Neutralstellung zu beaufschlagen.

Eine symmetrische und damit einfach zu fertigende Ausführungsform der Ventilvorrichtung ergibt sich, indem in Bezug auf die Längsachse des Ventilgehäuses eine mittige Position des Pumpenanschlusses von der Druckmittelpumpe gewählt wird. Zu beiden Seiten des Pumpenanschlusses schließt sich der erste und zweite Verbraucheranschluss und ein erster und zweiter Tankanschluss mit jeweils vorzugsweise gleichem Abstand zu dem Pumpenanschluss an.

Im Folgenden wird die erfindungsgemäße Ventilvorrichtung anhand verschiedener Ausführungsformen nach der Zeichnung näher erläutert. Dabei zeigen:
- Fig. 1: einen schematischen, nicht maßstäblichen Längsschnitt durch eine erste Ausführungsform der erfindungsgemäßen Ventilvorrichtung;
- Fig. 2: ein Detail II in Fig. 1;
- Fig. 3, 4 und 5: jeweils einen schematischen, nicht maßstäblichen Längsschnitt durch eine jeweils weitere Ausführungsform der erfindungsgemäßen Ventilvorrichtung.

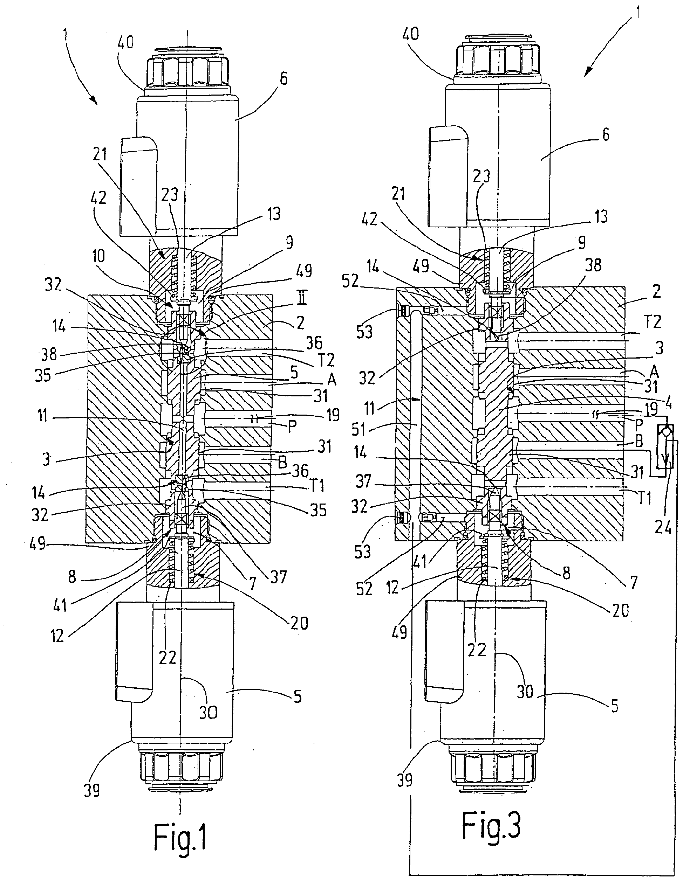

In der Fig. 1 ist in einem schematischen, nicht maßstäblichen Längsschnitt eine Ventilvorrichtung 1 zur Steuerung von Druckmittel, wie Hydrauliköl zu einem nicht näher gezeigten Verbraucher gezeigt. Die Ventilvorrichtung 1 weist ein Ventilgehäuse 2 auf, das im Wesentlichen zylindrisch ausgebildet ist. In dem Ventilgehäuse 2 ist eine Durchgangsbohrung, die als Kolbenbohrung 3 oder Zylinder für einen Ventilkolben 4 ausgebildet ist, eingebracht. Zur indirekten Betätigung des Ventilkolbens 4 sind zu beiden Seiten des Ventilgehäuses 2 ein erster und zweiter Elektromagnet 5, 6 in nicht näher gezeigter Weise in je einer Zentrierbohrung in dem Ventilgehäuse 2 angebracht. Die Elektromagnete 5, 6 sind als Proportionalmagnete ausgebildet. In dem Ventilgehäuse 2 sind Fluidanschlussstellen eingebracht, in Form von mindestens einem Pumpenanschluss P, zweier Verbraucheranschlüsse A, B sowie zweier Tankanschlüsse T1, T2. Der in dem Ventilgehäuse 2 längs verfahrbar geführte Ventilkolben 4 weist außenumfangsseitig radiale Vorsprünge 31, 32 auf. Der jeweilige radiale Außenumfang des jeweiligen Vorsprungs ist derart gewählt, dass er dichtend an der Innenumfangsseite der Kolbenbohrung 3 abgleiten kann.

In den Ausführungsbeispielen der Fig. 1 bis 5 sind die beiden mittleren Vorsprünge 31 den Verbraucheranschlüssen A, B zugeordnet und die beiden axial an den Enden des Ventilkolbens 4 angeordneten Vorsprünge 32 den Tankanschlüssen T1 und T2. Zwischen den Vorsprüngen 31, 32 ist der Ventilkolben 4 im Durchmesser reduziert, so dass fluidleitende Wege zwischen dem Innenraum des Ventilgehäuses und dem jeweils reduzierten Außendurchmesser des Ventilkolbens 4 gebildet sind.

Auf seinen beiden gegenüberliegenden Seiten weist das Ventilgehäuse 2 jeweils einen ersten Vorsteuerraum 7 und einen zweiten Vorsteuerraum 9 auf, dessen jeweiliges Volumen mittels des Vorsteuerkolbens 36,37 veränderbar ist. Die jeweiligen Vorsteuerräume 7, 9 sind fluidführend mit den jeweiligen Bohrungen 33, 34, die axial von einer ersten Kolbenrückseite 8 und einer zweiten Kolbenrückseite 10 des Ventilkolbens 4 geführt sind, verbunden.

Die beiden Vorsteuerräume 7, 9 sind ferner mit dem Pumpenanschluss P über eine als Längsbohrung in dem Ventilkolben 4 gebildete, fluidführende Verbindung 11 mit Steuerdruck oder Pumpendruck beaufschlagt. Die fluidführende Verbindung 11 in dem Ventilkolben 4 ist zu den Vorsteuerräumen 7, 9 in dem Ventilkolben 4 hin in einer außermittigen, im Durchmesser reduzierten Bohrung 33, 34 weitergeführt. Die im Durchmesser reduzierten Bohrungen sind jeweils in einem Ventilsitzstück 35, 36 eingebracht, wie dies die Fig. 1, 2, 4 und 5 zeigen. Die Ventilsitzstücke 35, 36 sind dichtend in einer jeweiligen Erweiterung der Bohrungen in dem Ventilkolben 4 eingepasst. Sie können im Bereich der Tankanschlüsse T1, T2 in Ruhepositionen des Ventilkolbens 4 zu liegen kommen.

Je ein von dem ersten bzw. zweiten Elektromagneten 5, 6 axial verschiebbarer Vorsteuerkolben 12, 13 kommt in einer radial, jeweils neben den Bohrungen 33, 34 in den Ventilsitzstücken 35, 36 angeordneten Abflussleitung 17, 18 bzw. den Öffnungen 15, 16 der Abflussleitungen mit einer Kolbenspitze 37, 38 zu liegen. Die Abflussleitungen 17, 18 in den Ventilsitzstücken 35, 36 bilden fluidführende Verbindungen 14 von den Vorsteuerräumen 7, 9 zu den jeweiligen Tankanschlüssen T1, T2 zwecks Abfluss von Druckmittel 19. Je eine Druckfeder 22, 23 bildet einen Energiespeicher 20, 21 für die Druckbeaufschlagung des jeweiligen Vorsteuerkolbens 12, 13 aus. Die Druckfedern 22, 23 bewirken so ein dichtendes Anpressen der Kolbenspitzen 37, 38 auf den Öffnungen 15, 16 und zudem eine Federzentrierung des Ventilkolbens 4 unter Einfluss der sich ausgleichenden Druckkräfte der Druckfedern 22, 23 in einer Ruheposition des Ventilkolbens 4. Die Druckfedern 22, 23 stützen sich dabei an einem Gehäuse 39, 40 eines jeden Elektromagneten 5, 6 ab sowie an einem Anschlagsbund 41, 42 des jeweiligen Vorsteuerkolbens 12, 13.

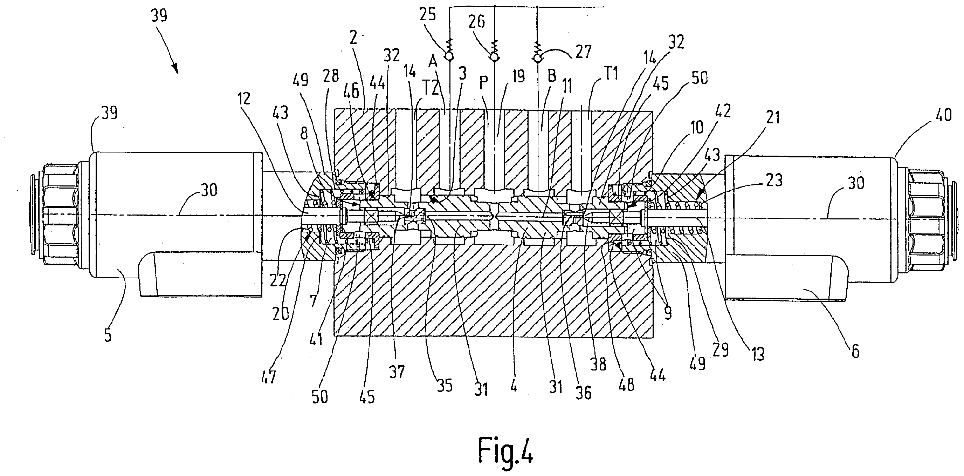

Wie die Fig. 4 ferner zeigt, kann jeweils eine Feder 28, 29 in jedem Vorsteuerraum 7, 9 an deren zylindrischen Innenumfangsflächen lose zentriert angeordnet sein. Die Federn 28, 29 in den Vorsteuerräumen 7, 9 sind zylindrische Druckfedern, wie auch die übrigen Federn der Ventilvorrichtung 1 und sind vom Durchmesser wesentlich größer als die den jeweiligen Vorsteuerkolben 12, 13 beaufschlagenden Druckfedern 22, 23, so dass sie diese Druckfedern 22, 23 und den jeweiligen Vorsteuerkolben 12, 13 radial umgreifen. Die Federn 28, 29 in den Vorsteuerräumen 7, 9 stützten sich an einem Durchmesserrücksprung 43 der Vorsteuerräume 7, 9 ab, der benachbart zu dem jeweiligen, dem Vorsteuerkolben 12, 13 zugeordneten Elektromagneten 5, 6 ist.

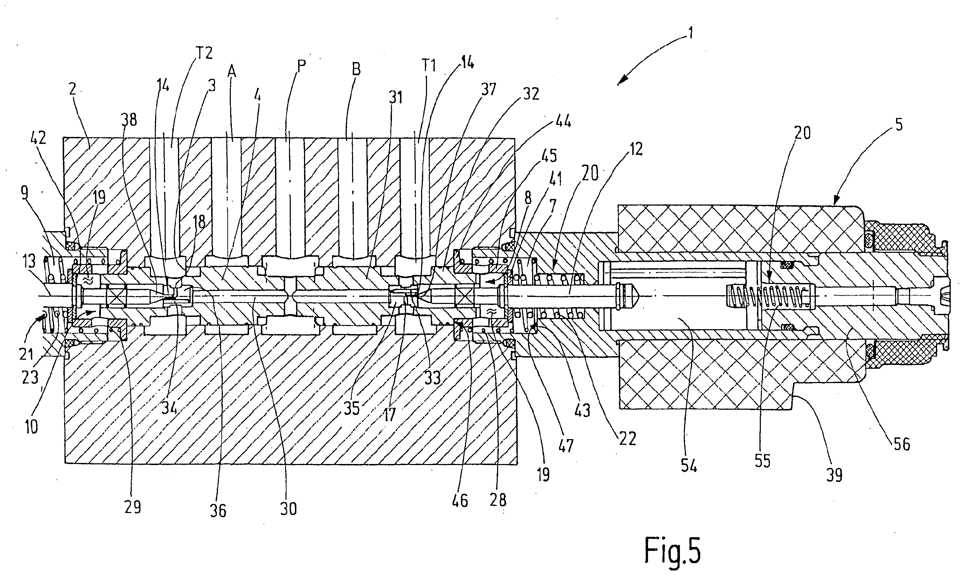

An ihren anderen Enden stützen sich die Federn 28, 29 jeweils an einer mit einem Bund 44 versehenen zylindrischen Hülse 45 ab, wobei die zylindrische Hülse 45 jeweils die Federn 28, 29 mit ihrer Außenumfangsfläche innen durchgreifen. Der jeweilige Bund 44 einer Hülse 45 ist in Anschlag mit je einer dem jeweiligen Elektromagneten 5, 6 zugewandten Stirnseite 46 eines Vorsprunges 32 an dem Ventilkolben 4 und einem durch das Ventilgehäuse 2 jeweils gebildeten Vorsteuerkammerboden 47. Auf diese Weise ist in der in Fig. 4 gezeigten Ventilvorrichtung 1 der Ventilkolben 4 axial in eine exakt reproduzierbare Ruhestellung gebracht. Er ist mit den Druckfedern 22, 23 und 28, 29 sowie dem jeweiligen Druck in den Vorsteuerräumen 7, 9 zentriert. Der jeweilige Bund 44 der Hülse 45 lässt sich axial in bestimmten Grenzen verfahren, die sich durch eine Stirnfläche 48 eines Einschraubstutzens 49 des jeweiligen Gehäuses 39, 40 der Elektromagneten 5, 6 definieren. Die jeweilige Hülse 45 weist radiale Durchtrittsbohrungen 50 für Druckmittel 19 auf. Wie die Fig.5 zeigt, können im Bereich jedes Elektromagneten weitere Druckfedern 55 zusätzlich die Zentrierung des Ventilkolbens 4 in seiner Neutralposition bewirken. Die Druckfeder 55 in der Fig.5 stützt sich an einem dem jeweiligen Vorsteuerkolben 12,13 gegenüberliegenden Ende eines jeden Ankers 54 der Elektromagnete 5,6 und einem Polkern 56 ab.

Wie die Ausführungsvariante der Ventilvorrichtung 1 in der Fig. 3 zeigt, ist die fluidführende Verbindung 11 zwischen dem Pumpenanschluss P und den Vorsteuerkammern 7, 9, die in der Art einer stetig mit System- oder Pumpendruck beaufschlagten Bypassleitung ausgeführt ist, auch über eine Längsbohrung 51 und von dieser senkrecht zu den jeweiligen Vorsteuerkammern 7, 9 geführten Stichkanälen 52, mit entsprechenden Blindstopfen 53 in dem Ventilgehäuse 2 realisierbar. Die Längsbohrung 51 liegt dabei radial beabstandet zu der Längsachse 30 des Ventilgehäuses 2.

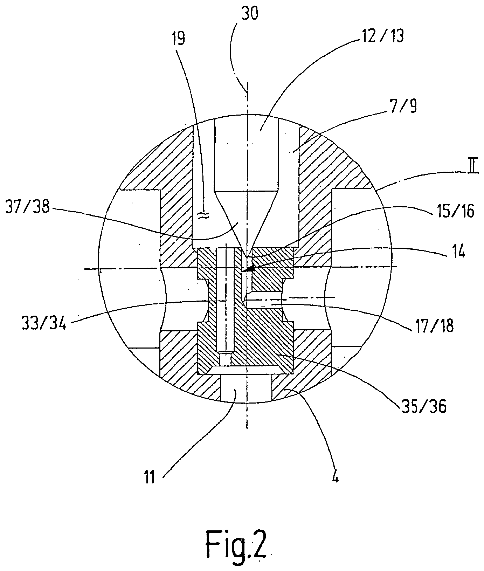

Im Folgenden wird die erfindungsgemäße Ventilvorrichtung 1 anhand des Ausführungsbeispieles in Fig. 1 und dem Detail II in Fig. 2 in ihrer Funktion näher erläutert. Ist die Ventilvorrichtung 1 in ihrer in allen Figuren gezeigten Neutralstellung, sind die Spulenwicklungen der Elektromagnete 5, 6 nicht bestromt und der Ventilkolben 4 wird über die Druckfedern (Polrohrfedern) 55 und/oder über die beiden Druckfedern 22, 23 und den damit beaufschlagten Vorsteuerkolben 12, 13 in der Mittellage gehalten. Die Kolbenspitzen 37, 38 der Vorsteuerkolben 12, 13 verschließen die Öffnungen 15, 16 der Abflussleitungen 17, 18. Die Vorsteuerräume 7, 9 sind mit Pumpendruck beaufschlagt, die Verbraucheranschlüsse A, B können mit Druck beaufschlagt sein und die Tankanschlüsse T1, T2 sind drucklos. Die dahingehende Ventilstellung würde dann der nicht ausgefahrenen Mittelstellung eines hydraulischen Arbeitszylinders als angeschlossenem Verbraucher beispielhaft entsprechen.

Wird der erste Elektromagnet 5 mit einem elektrischen Strom beaufschlagt, bewegt sich der erste Vorsteuerkolben 12 und dessen Kolbenspitze 37 in Richtung des ersten Elektromagneten 5. Dadurch wird die Öffnung 15 freigegeben und Vorsteueröl kann von dem ersten Vorsteuerraum 7 zu dem Tankanschluss T1 strömen. Der Druck in dem zweiten Vorsteuerraum 9 bleibt hingegen auf dem Pumpendruckniveau, so dass der Ventilkolben 4 durch das sich einstellende Druck-Ungleichgewicht in den Vorsteuerräumen 7, 9 sich in Richtung auf den ersten Elektromagneten 5 bewegt.

Dadurch wird eine fluidführende Verbindung in dem Ventilgehäuse 2 zwischen dem Pumpenanschluss P und dem Verbraucheranschluss A sowie zwischen dem Verbraucheranschluss B und dem Tankanschluss T2 freigegeben. Etwaige Störeinwirkungen auf den Ventilkolben 4 durch Reibungs- und Strömungskräfte werden ausgeglichen, indem vermehrt Druckmittel 19 oder Vorsteueröl fließt, wodurch der Druck in dem ersten Vorsteuerraum 8 weiter sinkt und das Kräfteungleichgewicht in axialer Richtung des Ventilkolbens 4 in Blickrichtung des Betrachters nach links sich vergrößert. Wird die Bestromung des ersten Elektromagneten 5 abgesenkt oder gar aufgehoben, so kehrt der Ventilkolben 4 unter der Wirkung der Federn 28 in seine Ausgangsposition zurück. Derselbe Ablauf in umgekehrter Richtung ergibt sich bei Bestromung des zweiten Elektromagneten 6.

Wie die Fig. 3 zeigt, kann der Versorgungsdruck für die beiden Vorsteuerräume 7, 9 nicht nur von dem Pumpenanschluss P sondern über eine Koppelung der Verbraucheranschlüsse A, B und des Pumpenanschlusses P unter Zwischenschaltung eines Wechselventils 24 entweder von dem Pumpenanschluss P oder einem der Verbraucheranschlüsse A, B abgegriffen werden, bevor das Druckmittel den Vorsteuerräumen 7, 9 zugeführt wird. Durch diese konstruktive Maßnahme lässt sich die Ventilvorrichtung 1 auch bei abgeschalteter Druckmittelpumpe bedienen.

Es kann, wie dies die Fig. 4 zeigt, vorteilhaft sein, durch eine Parallelschaltung der genannten Anschlüsse P, A, B über jeweils ein in Richtung der Vorsteuerräume 7, 9 öffnendes Rückschlagventil 25, 26, 27 zwischen den Anschlüssen und der fluidführenden Verbindung 11 den höchsten verfügbaren Druckmitteldruck abzugreifen. Die dahingehende vorgesteuerte Ventilvorrichtung 1 benötigt dann keine Wegsensoren für den Ventilkolben 4 noch eine Auswerte- oder Regelelektronik. Die Ventilvorrichtung 1 baut somit konstruktiv einfach auf und weist eine geringe Störanfälligkeit auf. Bei einer Unterbrechung der Stromzufuhr der Elektromagneten 5, 6 kehrt der Ventilkolben 4 selbständig in seine federzentrierte Mittenausgangsstellung zurück.

## Patentansprüche

1. Ventilvorrichtung mit einem Ventilgehäuse (2) und mit einem, in einer Kolbenbohrung (3) des Ventilgehäuses (2) axial verschiebbar angeordneten Ventilkolben (4), über den ein erster Verbraucheranschluss (A) und ein zweiter Verbraucheranschluss (B) wechselweise mit einem Pumpenanschluss (P) und mit einem Tankanschluss (T1, T2) durch die Wirkung eines ersten Elektromagneten (5) und eines zweiten Elektromagneten (6) verbindbar sind, wobei der Ventilkolben (4) aus einer zentrierten, vorzugsweise mittleren Ruhestellung heraus zur Verbindung des ersten Verbraucheranschlusses (A) mit dem Pumpenanschluss (P) und des zweiten Verbraucheranschlusses (B) mit dem Tankanschluss (T1, T2) in eine erste Richtung und zur umgekehrten fluidführenden Verbindung der Anschlüsse (A, B, P, T1, T2) in eine entgegengesetzte Richtung verschiebbar ist, wobei ein erster Vorsteuerraum (7), der eine erste Kolbenrückseite (8) des Ventilkolbens (4) mit einer Druckkraft beaufschlagt, und ein zweiter Vorsteuerraum (9) vorgesehen sind, der eine zweite Kolbenrückseite (10) mit einer Druckkraft beaufschlagt, wobei der Druck in den Vorsteuerräumen (7, 9) durch einen ersten und einen zweiten Vorsteuerkolben (12 und 13) steuerbar ist, die mittels des ersten bzw. zweiten Elektromagneten (5, 7) bewegbar sind, wobei der erste und zweite Vorsteuerraum (7, 9) über eine fluidführende Verbindung (11) mit dem Pumpenanschluss (P) verbunden sind und wobei die Vorsteuerkolben (12, 13) je eine fluidführende Verbindung (14) zwischen den Vorsteuerräumen (7, 9) und dem Tankanschluss (T1, T2) freigeben oder sperren, **dadurch gekennzeichnet, dass** jeder Vorsteuerkolben (12, 13) eine Öffnung (15, 16) einer Abflussleitung (17, 18) in dem Ventilkolben (4) für Druckmittel (19) aus den Vorsteuerräumen (7, 9) zu je einem Tankanschluss (T1, T2) freigibt oder sperrt.

2. Ventilvorrichtung nach Anspruch 1, **dadurch gekennzeichnet, dass** die fluidführende Verbindung (14) zwischen dem Pumpenanschluss (P) und den Vorsteuerräumen (7, 9) in dem Ventilkolben (4) angeordnet ist.

3. Ventilvorrichtung nach Anspruch 1, **dadurch gekennzeichnet, dass** die fluidführende Verbindung (14) zwischen dem Pumpenanschluss (P) und den Vorsteuerräumen (7, 9) in dem Ventilgehäuse (2) angeordnet ist.

4. Ventilvorrichtung nach einem der Ansprüche 1 bis 3, **dadurch gekennzeichnet, dass** der Ventilkolben (4) bei unbestromten Elektromagneten (5, 6) mittels eines Energiespeichers (20, 21) in der Neutralstellung gehalten ist.

5. Ventilvorrichtung nach Anspruch 4, **dadurch gekennzeichnet, dass** die Energiespeicher (20, 21) Druckfedern (22, 23) sind.

6. Ventilvorrichtung nach einem der Ansprüche 1 bis 5, **dadurch gekennzeichnet, dass** die fluidführende Verbindung (11) zu den Vorsteuerräumen (7, 8) über ein Wechselventil (24) sowohl mit dem Pumpenanschluss (8) als auch mit einem Verbraucheranschluss (A, B) verbindbar ist.

7. Ventilvorrichtung nach einem der Ansprüche 1 bis 5, **dadurch gekennzeichnet, dass** die fluidführende Verbindung (11) zu den Vorsteuerräumen (7, 9) von dem Pumpenanschluss (P) und dem ersten und zweiten Verbraucheranschluss (A, B) jeweils über ein Rückschlagventil (25, 26, 27) zu den Vorsteuerräumen (7, 9) gebildet ist.

8. Ventilvorrichtung nach einem der Ansprüche 1 bis 7, **dadurch gekennzeichnet, dass** in jedem Vorsteuerraum (7, 9) eine den Ventilkolben (4) im Sinne des Systemdruckes in den Vorsteuerräumen (7, 9) beaufschlagende Feder (28, 29) eingesetzt ist.

9. Ventilvorrichtung nach einem der Ansprüche 1 bis 8, **dadurch gekennzeichnet, dass** jeweils ein Anker (54) der Elektromagneten (5,6) mit einer Druckfeder (55) im Sinne einer Einhaltung einer Neutralstellung des Ventilkolbens (4) beaufschlagt ist.

10. Ventilvorrichtung nach einem der Ansprüche 1 bis 9, **dadurch gekennzeichnet, dass** der erste Vorsteuerkolben (18) und der zweite Vorsteuerkolben (13) mit jeweils einem Energiespeicher (20, 21) im Sinne eines Schließens der fluidführenden Verbindung (14) zwischen dem ersten Vorsteuerraum (7) und dem Tankanschluss (T1) sowie dem zweiten Vorsteuerraum (9) und dem Tankanschluss (T2) beaufschlagt ist.

11. Ventilvorrichtung nach einem der Ansprüche 1 bis 10, **dadurch gekennzeichnet, dass** der Pumpenanschluss (P) in Richtung einer Längsachse (30) des Ventilgehäuses (2) zwischen den jeweiligen Verbraucheranschlüssen (A, B) angeordnet ist.

12. Ventilvorrichtung nach Anspruch 11, **dadurch gekennzeichnet, dass** die Verbraucheranschlüsse (A, B) zwischen den jeweiligen Tankanschlüssen (T1, T2) in Richtung der Längsachse (30) des Ventilgehäuses (2) angeordnet sind.

## Claims

1. A valve device with a valve housing (2) and a valve piston (4) which is arranged to be able to move axially in a piston bore (3) of the valve housing (2), via which valve piston a first load connection (A) and a second load connection (B) can be alternately connected to a pump connection (P) and to a tank connection (T1, T2) by the action of a first electromagnet (5) and a second electromagnet (6), wherein the valve piston (4) can be moved out of a centred, preferably middle rest position in order to connect the first load connection (A) to the pump connection (P) and the second load connection (B) to the tank connection (T1, T2) in a first direction and for reversed fluid-conducting connection of the connections (A, B, P, T1, T2) in an opposite direction, wherein a first pilot chamber (7) which pressurises a first piston back side (8) of the valve piston (4) and a second pilot chamber (9) which pressurises a second piston back side (10) are provided, wherein the pressure in the pilot chambers (7, 9) can be controlled by a first and a second pilot piston (12 and 13) which can be moved by means of the first or second electromagnet (5, 7), wherein the first and second pilot chamber (7, 9) are connected to the pump connection (P) via a fluid-conducting connection (11) and wherein the pilot pistons (12, 13) clear or block one fluid-conducting connection (14) at a time between the pilot chambers (7, 9) and the tank connection (T1, T2), **characterised in that** each pilot piston (12, 13) clears or blocks an opening (15, 16) of a drain line (17, 18) in the valve piston (4) for pressure media (19) from the pilot chambers (7, 9) to one tank connection (T1, T2) at a time.

2. The valve device according to claim 1, **characterised in that** the fluid-conducting connection (14) is arranged between the pump connection (P) and the pilot chambers (7, 9) in the valve piston (4).

3. The valve device according to claim 1, **characterised in that** the fluid-conducting connection (14) is located between the pump connection (P) and the pilot chambers (7, 9) in the valve housing (2).

4. The valve device according to one of claims 1 to 3, **characterised in that**, when the electromagnets (5, 6) are de-energised, the valve piston (4) is kept in the neutral position by means of an energy storage mechanism (20, 21).

5. The valve device according to claim 4, **characterised in that** the energy storage mechanisms (20, 21) are compression springs (22, 23).

6. The valve device according to one of claims 1 to 5, **characterised in that** the fluid-conducting connection (11) to the pilot chambers (7, 8) can be connected via a shuttle valve (24) both to the pump connection (P) and also to a load connection (A, B).

7. The valve device according to one of claims 1 to 5, **characterised in that** the fluid-conducting connection (11) to the pilot chambers (7, 9) is formed by the pump connection (P) and the first and second load connection (A, B) via one nonreturn valve (25, 26, 27) at a time to the pilot chambers (7, 9).

8. The valve device according to one of claims 1 to 7, **characterised in that** a spring (28, 29) acting on the valve piston (4) for the purposes of the system pressure in the pilot chambers (7, 9) is inserted into each pilot chamber (7, 9).

9. The valve device according to one of claims 1 to 8, **characterised in that** one compression spring (55) acts on one armature (54) of the electromagnets (5, 6) at a time for the purposes of maintaining a neutral position of the valve piston (4).

10. The valve device according to one of claims 1 to 9, **characterised in that** one energy storage mechanism (20, 21) at a time acts on the first pilot piston (18) and the second pilot piston (13) for the purposes of closing the fluid-conducting connection (14) between the first pilot chamber (7) and the tank connection (T1) as well as the second pilot chamber (9) and the tank connection (T2).

11. The valve device according to one of claims 1 to 10, **characterised in that** the pump connection (P) is arranged in direction of a longitudinal axis (30) of the valve housing (2) between the respective load connections (A, B).

12. The valve device according to claim 11, **characterised in that** the load connections (A, B) are arranged between the respective tank connections (T1, T2) in direction of the longitudinal axis (30) of the valve housing (2).

## Revendications

1. Dispositif de soupape, comprenant un corps (2) de soupape et un piston (4) de soupape, qui est monté coulissant axialement dans un alésage (3) pour piston du corps (2) de la soupape et par lequel un premier raccord (A) d'utilisateur et un deuxième raccord (B) d'utilisateur peuvent, tour à tour, communiquer avec un raccord (P) de pompe et avec un raccord (T1, T2) de réservoir, par l'effet d'un premier électroaimant (5) et d'un deuxième électroaimant (6), le piston (4) de la soupape pouvant coulisser d'une position de repos centrée, de préférence médiane, pour la mise en communication du premier raccord (A) d'utilisateur avec le raccord (P) de pompe et du deuxième raccord (B) d'utilisateur avec le raccord (T1, T2) de réservoir, dans un premier sens et, pour la communication fluidique inversée des raccords (A, B, P, T1, T2), dans un sens contraire, dans lequel il est prévu un premier espace (7) pilote, qui applique, à une première face (8) arrière du piston (4) de la soupape, une force de pression, et un deuxième espace (9) pilote, qui applique, à une deuxième face (10) arrière du piston, une force de pression, la pression, dans les espaces (7, 9) pilotes, pouvant être commandée par un premier et par un deuxième pistons (12 et 13) pilotes, qui peuvent être déplacés au moyen du premier ou, respectivement, du deuxième électroaimant (5, 7), le premier et le deuxième espaces (7, 9) pilotes communiquant, par une liaison (11) fluidique, avec le raccord (P) de pompe et les pistons (12, 13) pilotes libérant ou bloquant une liaison (14) fluidique entre les espaces (7, 9) pilotes et le raccord (T1, T2) de réservoir, **caractérisé en ce que** chaque piston (12, 13) pilote libère ou bloque une ouverture (15, 16) d'un conduit (17, 18) d'évacuation dans le piston (4) de la soupape, pour du fluide (19) sous pression allant des espaces (7, 9) pilotes à, respectivement, un raccord (T1, T2) de réservoir.

2. Dispositif de soupape suivant la revendication 1, **caractérisé en ce que** la liaison (14) fluidique entre le raccord (P) de pompe et les espaces (7, 9) pilotes est disposée dans le piston (4) de la soupape.

3. Dispositif de soupape suivant la revendication 1, **caractérisé en ce que** la liaison (14) fluidique entre le raccord (P) de pompe et les espaces (7, 9) pilotes est disposée dans le corps (2) de la soupape.

4. Dispositif de soupape suivant l'une des revendications 1 à 3, **caractérisé en ce que** le piston (4) de soupape est maintenu dans la position neutre, au moyen d'un accumulateur (20, 21) d'énergie, lorsque les électroaimants (5, 6) ne sont pas alimentés en courant.

5. Dispositif de soupape suivant la revendication 4, **caractérisé en ce que** les accumulateurs (20, 21) d'énergie sont des ressorts (22, 23) de compression.

6. Dispositif de soupape suivant l'une des revendications 1 à 5, **caractérisé en ce que** la liaison (11) fluidique allant aux espaces (7, 8) pilotes peut, par une soupape (24) à deux voies, être reliée tant au raccord (8) de pompe qu'également à un raccord (A, B) d'utilisateur.

7. Dispositif de soupape suivant l'une des revendications 1 à 5, **caractérisé en ce que** la liaison (11) fluidique allant aux espaces (7, 9) pilotes est formée du raccord (P) de pompe et du premier et du deuxième raccord (A, B) d'utilisateur, respectivement, par un clapet (25, 26, 27) antiretour par rapport aux espaces (7, 9) pilotes.

8. Dispositif de soupape suivant l'une des revendications 1 à 7, **caractérisé en ce que** dans chaque espace (7, 9) pilote est inséré un ressort (28, 29) s'appliquant au piston (4) de soupape dans le sens de la pression de système dans les espaces (7, 9) pilotes.

9. Dispositif de soupape suivant l'une des revendications 1 à 8, **caractérisé en ce que**, respectivement, une armature (54) des électroaimants (5, 6) est soumise à une force (55) de ressort dans le sens d'un maintien d'une position neutre du piston (4) de soupape.

10. Dispositif de soupape suivant l'une des revendications 1 à 9, **caractérisé en ce que** le premier piston (18) pilote et le deuxième piston (13) pilote sont alimentés par, respectivement, un accumulateur (20, 21) d'énergie dans le sens d'une fermeture de la liaison (14) fluidique entre le premier espace (7) pilote et le raccord (T1) de réservoir, ainsi qu'entre le deuxième espace (9) pilote et le raccord (T2) de réservoir.

11. Dispositif de soupape suivant l'une des revendications 1 à 10, **caractérisé en ce que** le raccord (P) de pompe est monté dans la direction d'un axe (30) longitudinal du corps (2) de la soupape entre les raccords (A, B) d'utilisateur.

12. Dispositif de soupape suivant la revendication 11, **caractérisé en ce que** les raccords (A, B) d'utilisateur sont disposés entre les raccords (T1, T2) de réservoir dans le sens de l'axe (30) longitudinal du corps (2) de la soupape.
